# EUROPEAN PATENT SPECIFICATION

(11) **EP 2 392 712 B1**
(45) Date of publication and mention of the grant of the patent: **26.08.2015**
(21) Application number: 10182697.2
(22) Date of filing: 23.02.2006
(51) Int. Cl.: D04H 1/00, C08J 3/20, C08J 3/22, C08K 5/01, C08L 101/00

(54) **Polymeric composites having enhanced reversible thermal properties and methods of forming thereof**
Polymerische Zusammensetzungen mit verstärkten umkehrbaren thermischen Eigenschaften und Verfahren zu deren Herstellung
Composites polymères dotés de propriétés thermiques réversibles améliorées et leurs procédés de formation

(30) Priority: 11.03.2005 US 78656
(43) Date of publication of application: 07.12.2011
(62) Divisional of application: 06735750.9
(73) Proprietor: Outlast Technologies LLC, Golden, CO 80403 (US)
(72) Inventor: Hartmann, Mark Henry, Superior, CO 80027 (US); Magill, Monte C., Greeley, CO 80634 (US)
(74) Representative: Schmid, Wolfgang

(56) References cited:
- WO-A-03/068414
- WO-A-2005/017247
- US-A- 5 565 132
- US-A1- 2003 035 951
- DATABASE WPI Week 200528 Thomson Scientific, London, GB; AN 2005-269955 XP002469351, & KR 2004 100 285 A (HUVIS CORP) 2 December 2004 (2004-12-02)

## Description

### FIELD OF THE INVENTION

The invention relates to polymeric composites and their manufacture. More particularly, the invention relates to polymeric composites including phase change materials that are useful in the manufacture of synthetic fibers.

### BACKGROUND OF THE INVENTION

Many fabrics are made from synthetic fibers. Conventionally, two processes are used to manufacture synthetic fibers: a wet solution process and a melt spinning process. The wet solution process is generally used to form acrylic fibers, while the melt spinning process is generally used to form nylon fibers, polyester fibers, polypropylene fibers, and other similar type fibers. As is well known, an acrylic fiber includes a long-chain synthetic polymer characterized by the presence of acrylonitrile units, a nylon fiber includes a long-chain synthetic polyamide polymer characterized by the presence of an amide group -CONH-, a polyester fiber includes a long-chain synthetic polymer having at least 85 percent by weight of an ester of a substituted aromatic carboxylic acid unit, and a polypropylene fiber includes a long-chain synthetic crystalline polymer having at least 85 percent by weight of an olefm unit and typically having a molecular weight of about 40,000 or more.

The melt spinning process is of particular interest, since a large portion of the synthetic fibers that are used in the textile industry are manufactured by this technique. The melt spinning process generally involves passing a molten polymeric material through a device that is known as a spinneret to thereby form a set of individual synthetic fibers. Once formed, the synthetic fibers can be collected into a strand or cut into staple fibers. Synthetic fibers can be used to make woven or non-woven fabrics, or, alternatively, synthetic fibers can be wound into a yarn to be used thereafter in a weaving or a knitting process to form a synthetic fabric.

Phase change materials have been incorporated into acrylic fibers to enable the fibers to provide enhanced reversible thermal properties and to enable fabrics made from such fibers to perform similar functions. This is readily accomplished, in part due to the high levels of volatile materials (e.g., solvents) typically associated with the wet solution process of forming acrylic fibers. However, it is more problematic to incorporate phase change materials into melt spun synthetic fibers, since high levels of volatile materials are typically not present or desired in the melt spinning process. Previous attempts to incorporate phase change materials into melt spun synthetic fibers typically involved mixing the phase change materials with a standard fiber-grade thermoplastic polymer to form a blend and subsequently melt spinning this blend to form the synthetic fibers. Such attempts generally led to inadequate dispersion of the phase change materials within the fibers, poor fiber properties, and poor processability unless low concentrations of the phase change materials were used. However, with low concentrations of the phase change materials, the desired enhanced reversible thermal properties normally associated with use of the phase change materials can be difficult to realize.

It is against this background that a need arose to develop the polymeric composites described herein.

### SUMMARY OF THE INVENTION

In one aspect, the invention relates to a method of manufacturing a polymeric composite. In one embodiment, the method includes the steps according to claim 1, namely: (a) mixing a set of microcapsules containing a phase change material with a dispersing polymeric material to form a first blend, the dispersing polymeric material having a latent heat of at least 40 J/g and a transition temperature in the range of 0°C to 50°C; and (b) processing the first blend to form the polymeric composite.

In another embodiment, the method includes the steps according to claim 17, namely: (a) melting a first temperature regulating material to form a first melt; (b) dispersing a second temperature regulating material in the first melt to form a first blend; (c) processing the first blend to form granules; (d) melting a matrix polymeric material to form a second melt; (e) dispersing the granules in the second melt to form a second blend; and (f) processing the second blend to form the polymeric composite, wherein the first temperature regulating material includes a polymeric phase change material having a latent heat of at least 50J/g and a transition temperature of 10°C to 50°C, and wherein the second temperature regulating material includes a plurality of microcapsules containing a phase change material having a latent heat of at least 50 J/g and a transition temperature of 10°C to 50°C.

In another aspect, the invention relates to a polymeric composite with the features according to claim 19. In one embodiment, the polymeric composite includes: (a) a polymeric material having a latent heat of at least 40 J/g and a transition temperature in the range of 0°C to 50°C; and (b) a set of microcapsules dispersed in the polymeric material, the microcapsules containing a phase change material having a latent heat of at least 40 J/g and a transition temperature in the range of 0°C to 50°C.

In another embodiment, the invention relates to a polymeric composite with the features according to claim 26. In that embodiment, the the polymeric composite includes a blend of a polymeric material and a non-encapsulated phase change material. The polymeric material has a partial affinity for the non-encapsulated phase change material, such that the non-encapsulated phase change material forms a set of domains dispersed in the polymeric material. The non-encapsulated phase change material has a latent heat of at least 60 J/g and a transition temperature in the range of 10°C to 50°C, wherein the polymeric material has a latent heat higher than 40 J/g and a transistion temperature between 0°C and 50°C.

Other aspects and embodiments of the invention are also contemplated. The foregoing summary and the following detailed description are not meant to restrict the invention to any particular embodiment but are merely meant to describe some embodiments of the invention.

### BRIEF DESCRIPTION OF THE DRAWINGS

For a better understanding of the nature and objects of the invention, reference should be made to the following detailed description taken in conjunction with the accompanying drawings.
FIG. 1 illustrates a manufacturing process to form a polymeric composite in accordance with an embodiment of the invention.
FIG. 2 illustrates a manufacturing process to form a polymeric composite in accordance with another embodiment of the invention.
FIG. 3 illustrates a manufacturing process to form a polymeric composite in accordance with a further embodiment of the invention.

### DETAILED DESCRIPTION

Embodiments of the invention relate to polymeric composites having enhanced reversible thermal properties and methods of manufacturing the same. Polymeric composites in accordance with various embodiments of the invention have the ability to absorb and release thermal energy under different environmental conditions. In addition, the polymeric composites can exhibit, for example, improved dispersion or higher loading levels of a phase change material. The polymeric composites can be formed in a variety of forms or shapes, such as pellets, fibers, flakes, sheets, films, rods, and so forth. The polymeric composites can be used as is or incorporated in various articles to provide a thermal regulating property while providing improved strength to the articles. For example, polymeric composites in accordance with various embodiments of the invention can be used in textiles (e.g., fabrics), apparel (e.g., outdoor clothing, drysuits, and protective suits), footwear (e.g., socks, boots, and insoles), medical products (e.g., thermal blankets, therapeutic pads, incontinent pads, and hot/cold packs), containers and packagings (e.g., beverage and food containers, food warmers, seat cushions, and circuit board laminates), buildings (e.g., insulation in walls or ceilings, wallpaper, curtain linings, pipe wraps, carpets, and tiles), appliances (e.g., insulation in house appliances), and other products (e.g., automotive lining material, sleeping bags, and bedding).

Polymeric composites in accordance with various embodiments of the invention can be processed to form a variety of articles having enhanced reversible thermal properties. For example, polymeric composites can be formed as pellets that are useful to form synthetic fibers, for injection molding processes, or for extrusion processes. Use of these pellets can provide benefits that are achieved by incorporating a phase change material into a variety of articles, which articles include, for example, fibers such as acrylic fibers, nylon fibers, polyester fibers, polyethylene fibers, and polypropylene fibers; films; foams; and injection molded articles.

Polymeric composites in accordance with various embodiments of the invention can provide an improved level of comfort when incorporated in articles such as apparel or footwear. In particular, the articles can provide such improved level of comfort under different or changing environmental conditions. The use of phase change materials allows the articles to provide "multi-directional" or "dynamic" thermal regulation rather than "unidirectional" or "static" thermal regulation. In particular, in accordance with "multi-directional" thermal regulation, the articles can absorb thermal energy in warm weather as well as release thermal energy in cold weather. In such manner, the articles can provide cooling in warm weather and heating in cold weather, thus maintaining a desired level of comfort under different weather conditions. And, in accordance with "dynamic" thermal regulation, the articles can adapt or adjust their thermal regulating property under changing environmental conditions. In such manner, the articles can be capable of multiple uses, such as for both warm weather and cold weather. Moreover, the articles can adapt or adjust their thermal regulating property without requiring an external triggering mechanism, such as moisture or sunlight.

In conjunction with a thermal regulating property provided, polymeric composites in accordance with various embodiments of the invention when incorporated, for example, in apparel or footwear can provide other improvements in a level of comfort. For example, articles incorporating the polymeric composites can provide a reduction in an individual's skin moisture, such as due to perspiration. In particular, the articles can lower the temperature or the relative humidity of the skin, thereby providing a lower degree of skin moisture and a higher level of comfort. The use of specific materials and specific apparel or footwear design features can further enhance the level of comfort. For example, the articles can be used in conjunction with certain additives, treatments, or coatings to provide further benefits in thermal regulating and moisture management properties.

A polymeric composite according to some embodiments of the invention can include one or more materials. According to some embodiments of the invention, the polymeric composite can include a temperature regulating material, a dispersing polymeric material, and a matrix polymeric material. According to some embodiments of the invention, the polymeric composite is a liquid melt mixture or a solidified melt mixture of the temperature regulating material, the dispersing polymeric material, and the matrix polymeric material. Typically, the temperature regulating material is uniformly dispersed within the polymeric composite. However, depending upon the particular characteristics desired from the polymeric composite, the dispersion of the temperature regulating material can be varied within the polymeric composite. The dispersing polymeric material and the matrix polymeric material can be the same or different. It is also contemplated that one or more of the temperature regulating material, the dispersing polymeric material, and the matrix polymeric material can be omitted for certain embodiments of the invention. For example, the polymeric composite can include the temperature regulating material and the dispersing polymeric material without requiring the matrix polymeric material.

Depending on the method of manufacturing a polymeric composite, desirability of further processing, or the particular application of the polymeric composite, the polymeric composite can further include one or more additives, such as water, surfactants, dispersants, anti-foam agents (e.g., silicone containing compounds and flourine containing compounds), antioxidants (e.g., hindered phenols and phosphites), thermal stabilizers (e.g., phosphites, organophosphorous compounds, metal salts of organic carboxylic acids, and phenolic compounds), light or UV stabilizers (e.g., hydroxy benzoates, hindered hydroxy benzoates, and hindered amines), light or UV absorbing additives (e.g., ceramic particles of Group IV transition metal carbides and oxides), microwave absorbing additives (e.g., multifunctional primary alcohols, glycerine, and carbon), reinforcing-fibers (e.g., carbon fibers, aramid fibers, and glass fibers), conductive fibers or particles (e.g., graphite or activated carbon fibers or particles), lubricants, process aids (e.g., metal salts of fatty acids, fatty acid esters, fatty acid ethers, fatty acid amides, sulfonamides, polysiloxanes, organophosphorous compounds, and phenolic polyethers), fire retardants (e.g., halogenated compounds, phosphorous compounds, organophosphates, organobromides, alumina trihydrate, melamine derivatives, magnesium hydroxide, antimony compounds, antimony oxide, and boron compounds), anti-blocking additives (e.g., silica, talc, zeolites, metal carbonates, and organic polymers), anti-fogging additives (e.g., non-ionic surfactants, glycerol esters, polyglycerol esters, sorbitan esters and their ethoxylates, nonyl phenyl ethoxylates, and alcohol ethyoxylates), anti-static additives (e.g., non-ionics such as fatty acid esters, ethoxylated alkylamines, diethanolamides, and ethoxylated alcohol; anionics such as alkylsulfonates and alkylphosphates; cationics such as metal salts of chlorides, methosulfates or nitrates, and quaternary ammonium compounds; and amphoterics such as alkylbetaines), anti-microbials (e.g., arsenic compounds, sulfur, copper compounds, isothiazolins phthalamides, carbamates, silver base inorganic agents, silver zinc zeolites, silver copper zeolites, silver zeolites, metal oxides, and silicates), crosslinkers or controlled degradation agents (e.g., peroxides, azo compounds, and silanes), colorants, pigments, dyes, fluorescent whitening agents or optical brighteners (e.g., bis-benzoxazoles, phenylcoumarins, and bis-(styryl)biphenyls), fillers (e.g., natural minerals and metals such as oxides, hydroxides, carbonates, sulfates, and silicates; talc; clay; wollastonite; graphite; carbon black; carbon fibers; glass fibers and beads; ceramic fibers and beads; metal fibers and beads; flours; and fibers of natural or synthetic origin such as fibers of wood, starch, or cellulose flours), coupling agents (e.g., silanes, titanates, zirconates, fatty acid salts, anhydrides, epoxies, and unsaturated polymeric acids), reinforcement agents, crystallization or nucleation agents (e.g., any material which increases or improves the crystallinity in a polymer, such as to improve rate/kinetics of crystal growth, number of crystals grown, or type of crystals grown), and so forth.

According to some embodiments of the invention, a temperature regulating material can include one or more phase change materials. In general, a phase change material can include any substance (or mixture of substances) that has the capability of absorbing or releasing thermal energy to reduce or eliminate heat flow at or within a temperature stabilizing range. The temperature stabilizing range can include a particular transition temperature or a range of transition temperatures. A phase change material used in conjunction with various embodiments of the invention can be capable of inhibiting a flow of thermal energy during a time when the phase change material is absorbing or releasing heat, typically as the phase change material undergoes a transition between two states (e.g., liquid and solid states, liquid and gaseous states, solid and gaseous states, or two solid states). This action is typically transient, e.g., can last until a latent heat of the phase change material is absorbed or released during a heating or cooling process. As used herein, the term "latent heat" can refer to an amount of heat absorbed or released by a substance (or mixture of substances) as it undergoes a transition between two states. Thermal energy can be stored or removed from a phase change material, and the phase change material typically can be effectively recharged by a source of heat or cold. By selecting an appropriate phase change material, a polymeric composite can be formed for any application thereof.

According to some embodiments of the invention, a phase change material can be a solid/solid phase change material. A solid/solid phase change material is a type of phase change material that typically undergoes a transition between two solid states (e.g., a crystalline or mesocrystalline phase transformation) and, hence, typically does not become a liquid during use.

A phase change material can include a mixture of two or more substances. By selecting two or more different substances and forming a mixture, a temperature stabilizing range can be adjusted for any particular application of a polymeric composite. According to some embodiments of the invention, a mixture of two or more different substances can exhibit two or more distinct transition temperatures or a single modified transition temperature when incorporated in a polymeric composite.

Phase change materials that can be incorporated in polymeric composites in accordance with various embodiments of the invention include a variety of organic and inorganic substances. Examples of phase change materials include hydrocarbons (e.g., straight chain alkanes or paraffinic hydrocarbons, branched-chain alkanes, unsaturated hydrocarbons, halogenated hydrocarbons, and alicyclic hydrocarbons), hydrated salts (e.g., calcium chloride hexahydrate, calcium bromide hexahydrate, magnesium nitrate hexahydrate, lithium nitrate trihydrate, potassium fluoride tetrahydrate, ammonium alum, magnesium chloride hexahydrate, sodium carbonate decahydrate, disodium phosphate dodecahydrate, sodium sulfate decahydrate, and sodium acetate trihydrate), waxes, oils, water, fatty acids, fatty acid esters, dibasic acids, dibasic esters, 1-halides, primary alcohols, aromatic compounds, clathrates, semi-clathrates, gas clathrates, anhydrides (e.g., stearic anhydride), ethylene carbonate, polyhydric alcohols (e.g., 2,2-dimethyl-1,3-propanediol, 2-hydroxymethyl-2-methyl-1,3-propanediol, ethylene glycol, polyethylene glycol, pentaerythritol, dipentaerythrital, pentaglycerine, tetramethylol ethane, neopentyl glycol, tetramethylol propane, 2-amino-2-methyl-1,3-propanediol, monoaminopentaerythritol, diaminopentaerythritol, and tris(hydroxymethyl)acetic acid), polymers (e.g., polyethylene, polyethylene glycol, polyethylene oxide, polypropylene, polypropylene glycol, polytetramethylene glycol, polypropylene malonate, polyneopentyl glycol sebacate, polypentane glutarate, polyvinyl myristate, polyvinyl stearate, polyvinyl laurate, polyhexadecyl methacrylate, polyoctadecyl methacrylate, polyesters produced by polycondensation of glycols (or their derivatives) with diacids (or their derivatives), and copolymers, such as polyacrylate or poly(meth)acrylate with alkyl hydrocarbon side chain or with polyethylene glycol side chain and copolymers including polyethylene, polyethylene glycol, polyethylene oxide, polypropylene, polypropylene glycol, or polytetramethylene glycol), metals, and mixtures thereof.

The selection of a phase change material will typically be dependent upon a desired transition temperature or a desired application of a resulting polymeric composite. For example, a phase change material having a transition temperature near room temperature can be desirable for applications in which the resulting polymeric composite is incorporated into apparel or footwear to maintain a comfortable temperature for a user.

A phase change material according to some embodiments of the invention can have a transition temperature ranging from about -40°C to about 125°C, such as from about -40°C to about 100°C or from about -5°C to about 125°C. In one embodiment useful for clothing applications, the phase change material can have a transition temperature ranging from about 0°C to about 50°C, such as from about 10°C to about 50°C, from about 15°C to about 45°C, from about 22°C to about 40°C, or from about 22°C to about 28°C. Also, the phase change material according to some embodiments of the invention can have a latent heat that is at least about 40 J/g, such as at least about 50 J/g, at least about 60 J/g, at least about 70 J/g, at least about 80 J/g, at least about 90 J/g, or at least about 100 J/g. In one embodiment useful for clothing applications, the phase change material can have a latent heat ranging from about 40 J/g to about 400 J/g, such as from about 60 J/g to about 400 J/g, from about 80 J/g to about 400 J/g, or from about 100 J/g to about 400 J/g.

According to some embodiments of the invention, particularly useful phase change materials include paraffinic hydrocarbons having from 10 to 44 carbon atoms (i.e., C₁₀ - C₄₄ paraffinic hydrocarbons). Table 1 provides a list of C₁₃ - C₂₈ paraffinic hydrocarbons that can be used as phase change materials in the polymeric composites described herein. The number of carbon atoms of a paraffinic hydrocarbon typically correlates with its melting point. For example, n-Octacosane, which includes 28 straight chain carbon atoms per molecule, has a melting point of 61.4°C. By comparison, n-Tridecane, which includes 13 straight chain carbon atoms per molecule, has a melting point of -5.5°C. According to an embodiment of the invention, n-Octadecane, which includes 18 straight chain carbon atoms per molecule and has a melting point of 28.2°C, is particularly desirable for clothing applications.

**Table 1**

| Paraffinic Hydrocarbon | No. of Carbon Atoms | Melting Point (°C) |
|---|---|---|
| n-Octacosane | 28 | 61.4 |
| n-Heptacosane | 27 | 59.0 |
| n-Hexacosane | 26 | 56.4 |
| n-Pentacosane | 25 | 53.7 |
| n-Tetracosane | 24 | 50.9 |
| n-Tricosane | 23 | 47.6 |
| n-Docosane | 22 | 44.4 |
| n-Heneicosane | 21 | 40.5 |
| n-Eicosane | 20 | 36.8 |
| n-Nonadecane | 19 | 32.1 |
| n-Octadecane | 18 | 28.2 |
| n-Heptadecane | 17 | 22.0 |
| n-Hexadecane | 16 | 18.2 |
| n-Pentadecane | 15 | 10.0 |
| n-Tetradecane | 14 | 5.9 |
| n-Tridecane | 13 | -5.5 |

Other useful phase change materials include polymeric phase change materials having transition temperatures suitable for a desired application of a polymeric composite (e.g., from about 22°C to about 40°C for clothing applications). A polymeric phase change material can include a polymer (or a mixture of polymers) having a variety of chain structures that include one or more types of monomer units. In particular, polymeric phase change materials can include linear polymers, branched polymers (e.g., star branched polymers, comb branched polymers, or dendritic branched polymers), or mixtures thereof. For certain applications, a polymeric phase change material desirably includes a linear polymer or a polymer with a small amount of branching to allow for a greater density and a greater degree of ordered molecular packing and crystallization. Such greater degree of ordered molecular packing and crystallization can lead to a larger latent heat and a narrower temperature stabilizing range (e.g., a well-defined transition temperature). A polymeric phase change material can include a homopolymer, a copolymer (e.g., terpolymer, statistical copolymer, random copolymer, alternating copolymer, periodic copolymer, block copolymer, radial copolymer, or graft copolymer), or a mixture thereof. Properties of one or more types of monomer units forming a polymeric phase change material can affect a transition temperature of the polymeric phase change material. Accordingly, the selection of the monomer units can be dependent upon a desired transition temperature or a desired application of polymeric composites that include the polymeric phase change material. As one of ordinary skill in the art will understand, the reactivity and functionality of a polymer can be altered by addition of a functional group, such as amine, amide, carboxyl, hydroxyl, ester, ether, epoxy, anhydride, isocyanate, silane, ketone, and aldehyde. Also, a polymeric phase change material can include a polymer capable of crosslinking, entanglement, or hydrogen bonding in order to increase its toughness or its resistance to heat, moisture, or chemicals.

As one of ordinary skill in the art will understand, some polymers can be provided in various forms having different molecular weights, since a molecular weight of a polymer can be determined by processing conditions used for forming the polymer. Accordingly, a polymeric phase change material can include a polymer (or a mixture of polymers) having a particular molecular weight or a particular range of molecular weights. As used herein, the term "molecular weight" can refer to a number average molecular weight, a weight average molecular weight, or a melt index of a polymer (or a mixture of polymers).

According to some embodiments of the invention, a polymeric phase change material can be desirable as a result of having a higher molecular weight, a larger molecular size, or a higher viscosity relative to non-polymeric phase change materials (e.g., paraffinic hydrocarbons). As a result of this larger molecular size or higher viscosity, a polymeric phase change material can exhibit a lesser tendency to leak from a polymeric composite during processing or during end use. For some embodiments of the invention, a polymeric phase change material can include polymers having a number average molecular weight ranging from about 400 to about 5,000,000, such as from about 2,000 to about 5,000,000, from about 8,000 to about 100,000, or from about 8,000 to about 15,000. When incorporated within a synthetic fiber, for example, its larger molecular size or its higher viscosity can prevent a polymeric phase change material from flowing through an exterior of the fiber. In addition to providing thermal regulating properties, a polymeric phase change material can provide improved mechanical properties (e.g., ductility, tensile strength, and hardness) when incorporated in articles in accordance with various embodiments of the invention. If desired, a polymeric phase change material having a desired transition temperature can be combined with a polymeric material (e.g., a dispersing polymeric material or a matrix polymeric material) to form a polymeric composite. According to some embodiments of the invention, a polymeric phase change material can provide adequate mechanical properties such that it can be used to form a polymeric composite without requiring another polymeric material, thus allowing for a higher loading level of the polymeric phase change material and improved thermal regulating properties. For example, it is contemplated that a polymeric phase change material can be used as is or can serve as a dispersing polymeric material to form a polymeric composite.

For example, polyethylene glycols can be used as a phase change material in some embodiments of the invention. The number average molecular weight of polyethylene glycol typically correlates with its melting point. For example, polyethylene glycols having a number average molecular weight in the range of about 570 to about 630 (e.g., Carbowax™ 600, available from The Dow Chemical Company, Midland, Michigan) typically will have a melting point of about 20°C to about 25°C, making them desirable for clothing applications. Other polyethylene glycols that can be useful at other temperature stabilizing ranges include polyethylene glycols having a number average molecular weight of about 400 and a melting point in the range of about 4°C to about 8°C, polyethylene glycols having a number average molecular weight in the range of about 1,000 to about 1,500 and a melting point in the range of about 42°C to about 48°C, and polyethylene glycols having a number average molecular weight of about 6,000 and a melting point in the range of about 56°C to about 63°C (e.g., Carbowax™ 400, 1500, and 6000, available from The Dow Chemical Company, Midland, Michigan).

Additional useful phase change materials include polymeric phase change materials based on polyethylene glycols that are endcapped with fatty acids. For example, polytetramethylene glycol fatty acid diesters having a melting point in the range of about 22°C to about 35°C can be formed from polyethylene glycols having a number average molecular weight in the range of about 400 to about 600 that are endcapped with stearic acid or lauric acid. Further useful phase change materials include polymeric phase change materials based on tetramethylene glycol. For example, polytetramethylene glycols having a number average molecular weight in the range of about 1,000 to about 1,800 (e.g., Terathane® 1000 and 1800, available from DuPont Inc., Wilmington, Delaware) typically have a melting point in the range of about 19°C to about 36°C. Polyethylene oxides having a melting point in the range of about 60°C to about 65°C also can be used as phase change materials in some embodiments of the invention.

For certain applications, polymeric phase change materials can include homopolymers having a melting point in the range of about 0°C to about 50°C that can be formed using conventional polymerization processes. Table 2 sets forth melting points of various homopolymers that can be formed from different types of monomer units.

**Table 2**

| Class of Monomer Unit | Homopolymer | Melting Point of Homopolymer (°C) |
|---|---|---|
| Acrylates, Methacrylates, and and Acrylamides | Polyoctadecyl methacrylate | 36 |
| | Polyhexadecyl methacrylate | 22 |
| | Poly-N-tetradecyl polyacrylamide | 18 |
| | Poly-N-tetradecyl polyacrylamide-1,1 dihydroperfluoro | 32-35 |
| Alkanes and Alkenes | Poly-1-decene | 34-40 |
| | Poly-1-heptene | 17 |
| | *cis*-polyoctenamer (Vestenamer® 6213, available from Degussa AG, Frankfurt, Germany) | 38 |
| | Poly-1-octene | 5-10 |
| | Poly-1-nonene | 19-22 |
| | *trans*-polypentemer | 23-34 |
| | Poly-1-undecene | 36 |
| | *cis*-polyisoprene | 28-36 |
| | syndiotactic 1,2-poly(1,3-pentadiene) | 10 |
| | 1-methyl-polydodecamethylene | 30 |
| Ethers | Polymethyleneoxytetramethylene oxide (Poly-1,3-dioxepane) | 30 |
| | Polyhexamethyleneoxymethylene oxide | 38 |
| | Polyoxacyclobutane (POX) | 34-36 |
| | n-octadecyl polyacetaldehyde | 18 |
| | Polytetramethylene glycol 1000 (Terathane® polyTHF 1000, available from DuPont Inc., Wilmington, Delaware) | 25-33 |
| | Polytetramethylene glycol 1400 (Terathane® polyTHF 1400, available from DuPont Inc., Wilmington, Delaware) | 27-35 |
| | Polytetramethylene glycol 1800 (Terathane® polyTHF 1800, available from DuPont Inc., Wilmington, Delaware) | 27-38 |
| | Polytetramethylene glycol 2000 (Terathane® polyTHF 2000, available from DuPont Inc., Wilmington, Delaware) | 28-40 |
| Vinyls | Polydodecyl vinyl ether | 30 |
| | Polyvinyl laurate | 16 |
| | Polyvinyl myristate | 28 |
| Sulfur Containing Compounds | 3,3-dimethyl-polytrimethylene sulfide | 19 |
| | Polymethylene sulfide | 35 |
| | Polytetramethylene disulfide | 39-44 |
| | Polysulfur trioxide | 32 |
| | 1-methyl-trimethylene-polysulfonyldivalerate | 35 |
| Silicon Containing Compounds | *beta*-2-polydiethyl siloxane | 17 |
| | Nonamethylene-poly-disiloxanylene dipropionamide-diethyl, dimethyl (Si) | 10 |
| | Nonamethylene-poly-disiloxanylene dipropionamide-tetraethyl (Si) | 10 |
| | Polymethyl hexadecyl siloxane | 35 |
| Amides and Nitrogen Containing Compounds | Poly-(hexamethylene)cyclopropylene dicarboxamide-cis-N,N'-dibutyl | 20 |
| | Poly-(hexamethylene)cyclopropylene dicarboxamide-cis-N,N'-diethyl | 5 |
| | Poly-(hexamethylene)cyclopropylene dicarboxamide-cis-N,N'-diisopropyl | 20 |
| | Poly-(hexamethylene)cyclopropylene dicarboxamide-cis-N,N'-dimethyl | 30 |
| | Polypentamethylene adipamide-2,2,3,3,4,4 hexafluoro (diamine)-cis-N,N'-dibutyl | 15 |
| | Polypentamethylene adipamide-2,2,3,3,4,4 hexafluoro (diamine)-cis-N,N'-diethyl | 20 |
| | Polypentamethylene adipamide-2,2,3,3,4,4 hexafluoro (diamine)-cis-N,N'-diisopropyl | 35 |
| | Polypentamethylene adipamide-2,2,3,3,4,4 hexafluoro (diamine)-cis-N,N'-dimethyl | 30 |
| | Poly-(4,4'-methylene diphenylene sebacamide)-N,N'-diethyl | 32 |
| | Polypentamethylene (hexamethylene disulfonyl)-dicaproamide | 25 |
| Esters | Poly-[ethylene 4,4'-oxydimethylene-di-2-(1,3-dioxolane)-caprylate] | 19 |
| | Polypentamethylene adipate-2,2,3,3,4,4 hexa fluoro | 34 |
| | (4-methyl-(R+)-7-polyhydroxyenanthic acid) | 36 |
| | Poly-[4-hydroxy tetramethylene-2-(1,3-dioxolane) caprylic acid] (*cis* or *trans*) | 23 |
| | Polypentamethylene 2,2'-dibenzoate | 13 |
| | Polytetramethylene 2,2'-dibenzoate | 36 |
| | Poly-1-methyl-trimethylene 2,2' dibenzoate | 38 |
| | Polycaprolactone glycol (Molecular weight = 830) | 35-45 |

Further desirable phase change materials include polyesters having a melting point in the range of about 0°C to about 40°C that can be formed, for example, by polycondensation of glycols (or their derivatives) with diacids (or their derivatives). Table 3 sets forth melting points of polyesters that can be formed with various combinations of glycols and diacids.

**Table 3**

| Glycol | Diacid | Melting Point of Polyester (°C) |
|---|---|---|
| Ethylene glycol | Carbonic | 39 |
| Ethylene glycol | Pimelic | 25 |
| Ethylene glycol | Diglycolic | 17-20 |
| Ethylene glycol | Thiodivaleric | 25-28 |
| 1,2- Propylene glycol | Diglycolic | 17 |
| Propylene glycol | Malonic | 33 |
| Propylene glycol | Glutaric | 35-39 |
| Propylene glycol | Diglycolic | 29-32 |
| Propylene glycol | Pimelic | 37 |
| 1,3-butanediol | Sulphenyl divaleric | 32 |
| 1,3-butanediol | Diphenic | 36 |
| 1,3-butanediol | Diphenyl methane-m,m'-diacid | 38 |
| 1,3-butanediol | *trans*-H,H-terephthalic acid | 18 |
| Butanediol | Glutaric | 36-38 |
| Butanediol | Pimelic | 38-41 |
| Butanediol | Azelaic | 37-39 |
| Butanediol | Thiodivaleric | 37 |
| Butanediol | Phthalic | 17 |
| Butanediol | Diphenic | 34 |
| Neopentyl glycol | Adipic | 37 |
| Neopentyl glycol | Suberic | 17 |
| Neopentyl glycol | Sebacic | 26 |
| Pentanediol | Succinic | 32 |
| Pentanediol | Glutaric | 22 |
| Pentanediol | Adipic | 36 |
| Pentanediol | Pimelic | 39 |
| Pentanediol | *para*-phenyl diacetic acid | 33 |
| Pentanediol | Diglycolic | 33 |
| Hexanediol | Glutaric | 28-34 |
| Hexanediol | 4-Octenedioate | 20 |
| Heptanediol | Oxalic | 31 |
| Octanediol | 4-Octenedioate | 39 |
| Nonanediol | *meta*-phenylene diglycolic | 35 |
| Decanediol | Malonic | 29-34 |
| Decanediol | Isophthalic | 34-36 |
| Decanediol | *meso*-tartaric | 33 |
| Diethylene glycol | Oxalic | 10 |
| Diethylene glycol | Suberic | 28-35 |
| Diethylene glycol | Sebacic | 36-44 |
| Diethylene glycol | Phthalic | 11 |
| Diethylene glycol | trans-H,H-terephthalic acid | 25 |
| Triethylene glycol | Sebacic | 28 |
| Triethylene glycol | Sulphonyl divaleric | 24 |
| Triethylene glycol | Phthalic | 10 |
| Triethylene glycol | Diphenic | 38 |
| *para*-dihydroxy-methyl benzene | Malonic | 36 |
| *meta*-dihydroxy-methyl benzene | Sebacic | 27 |
| *meta*-dihydroxy-methyl benzene | Diglycolic | 35 |

According to some embodiments of the invention, a polymeric phase change material having a desired transition temperature can be formed by reacting a phase change material (e.g., a phase change material discussed above) with a polymer (or a mixture of polymers). Thus, for example, n-octadecylic acid (i.e., stearic acid) can be reacted or esterified with polyvinyl alcohol to yield polyvinyl stearate, or dodecanoic acid (i.e., lauric acid) can be reacted or esterified with polyvinyl alcohol to yield polyvinyl laurate. Various combinations of phase change materials (e.g., phase change materials with one or more functional groups such as amine, carboxyl, hydroxyl, epoxy, silane, sulfuric, and so forth) and polymers can be reacted to yield polymeric phase change materials having desired transition temperatures.

Polymeric phase change materials having desired transition temperatures can be formed from various types of monomer units. For example, similar to polyoctadecyl methacrylate, a polymeric phase change material can be formed by polymerizing octadecyl methacrylate, which can be formed by esterification of octadecyl alcohol with methacrylic acid. Also, polymeric phase change materials can be formed by polymerizing a polymer (or a mixture of polymers). For example, poly-(polyethylene glycol) methacrylate, poly-(polyethylene glycol) acrylate, poly-(polytetramethylene glycol) methacrylate, and poly-(polytetramethylene glycol) acrylate can be formed by polymerizing polyethylene glycol methacrylate, polyethylene glycol acrylate, polytetramethylene glycol methacrylate, and polytetramethylene glycol acrylate, respectively. In this example, the monomer units can be formed by esterification of polyethylene glycol (or polytetramethylene glycol) with methacrylic acid (or acrylic acid). It is contemplated that polyglycols can be esterified with allyl alcohol or trans-esterified with vinyl acetate to form polyglycol vinyl ethers, which in turn can be polymerized to form poly-(polyglycol) vinyl ethers. In a similar manner, it is contemplated that polymeric phase change materials can be formed from homologues of polyglycols, such as ester or ether endcapped polyethylene glycols and polytetramethylene glycols.

According to some embodiments of the invention, a temperature regulating material can include a phase change material in a raw form (e.g., the phase change material is non-encapsulated at either a micro or macro level, i.e., not micro- or macroencapsulated). During manufacture of a polymeric composite, the phase change material in the raw form can be provided as a solid in a variety of forms (e.g., bulk form, powders, pellets, granules, flakes, and so forth) or as a liquid in a variety of forms (e.g., molten form, dissolved in a solvent, and so forth).

According to other embodiments of the invention, a temperature regulating material can include a containment structure that encapsulates, contains, surrounds, absorbs, or reacts with a phase change material. The containment structure can facilitate handling of the phase change material while offering a degree of protection to the phase change material from manufacturing conditions (e.g., high temperature or shear forces) associated with forming a polymeric composite or articles made from the polymeric composite. Moreover, the containment structure can serve to reduce or prevent leakage of the phase change material from the polymeric composite or from an article formed therefrom.

As an example of a containment structure, a temperature regulating material can include microcapsules that contain a phase change material, which microcapsules can be uniformly, or non-uniformly, dispersed within a polymeric composite. The microcapsules can be formed as hollow shells enclosing the phase change material and can include individual microcapsules formed in a variety of regular or irregular shapes (e.g., spherical, ellipsoidal, and so forth) and sizes. The individual microcapsules can have the same or different shapes or sizes. According to some embodiments of the invention, the microcapsules can have a maximum linear dimension (e.g., diameter) ranging from about 0.01 to about 100 microns. In one embodiment, the microcapsules can have a generally spherical shape and a maximum linear dimension (e.g., diameter) ranging from about 0.5 to about 10 microns, such as from about 0.5 to about 3 microns. Other examples of a containment structure include silica particles (e.g., precipitated silica particles, fumed silica particles, and mixtures thereof), zeolite particles, carbon particles (e.g., graphite particles, activated carbon particles, and mixtures thereof), and absorbent materials (e.g., absorbent polymeric materials, superabsorbent materials, cellulosic materials, poly(meth)acrylate materials, metal salts of poly(meth)acrylate materials, and mixtures thereof). For example, a temperature regulating material can include silica particles, zeolite particles, carbon particles, or an absorbent material impregnated with a phase change material.

According to some embodiments of the invention, a polymeric composite can include up to about 100 percent by weight of a temperature regulating material. In some embodiments, a polymeric composite can include from about 5 percent to about 70 percent by weight of a temperature regulating material. Thus, according to some embodiments of the invention, a polymeric composite can include from about 10 percent to about 30 percent or from about 15 percent to about 25 percent by weight of a temperature regulating material. And, according to other embodiments, a polymeric composite can include about 15 percent by weight of a temperature regulating material. As further discussed below, some embodiments of the invention employ water-wetted microcapsules containing a phase change material to form a polymeric composite. In such embodiments, a polymeric composite can include an amount of water that is typically less than about 1 percent by weight.

According to some embodiments of the invention, a polymeric composite can include two or more temperature regulating materials that differ from one another in some fashion. For example, the two temperature regulating materials can include two different phase change materials or a phase change material in a raw form and a phase change material in an encapsulated form. It is contemplated that the phase change material in the raw form can include a polymeric phase change material, which can serve as a dispersing polymeric material to form the polymeric composite.

In general, a dispersing polymeric material can include any polymer (or mixture of polymers) that facilitates incorporating a temperature regulating material in a polymeric composite. In embodiments where a polymeric phase change material serves as the dispersing polymeric material, the polymeric phase change material can be selected to have the characteristics discussed herein for the dispersing polymeric material. According to some embodiments of the invention, the dispersing polymeric material can be compatible or miscible with or have an affinity for the temperature regulating material. In some embodiments of the invention, such affinity can depend on, for example, similarity of solubility parameters, polarities, hydrophobic characteristics, or hydrophilic characteristics of the dispersing polymeric material and the temperature regulating material. Advantageously, such affinity can facilitate dispersion of the temperature regulating material in an intermediate molten or liquid form of the polymeric composite during its manufacture (e.g., in a melt of the dispersing polymeric material) and, thus, ultimately can facilitate incorporation of more uniform or greater amounts or loading level of a phase change material in the polymeric composite. In embodiments where the temperature regulating material includes a containment structure that contains a phase change material, the dispersing polymeric material can be selected for its affinity for the containment structure in conjunction with, or as an alternative to, its affinity for the phase change material. In particular, if the temperature regulating material includes microcapsules containing the phase change material, the dispersing polymeric material can be selected to have an affinity for the microcapsules (e.g., for a material or materials of which the microcapsules are formed). Such affinity can facilitate dispersion of the microcapsules containing the phase change material in an intermediate molten or liquid form of the polymeric composite (e.g., in a melt of the dispersing polymeric material) and, thus, ultimately can facilitate incorporation of more uniform or greater amounts or loading level of the phase change material in the polymeric composite. For example, the dispersing polymeric material can be selected to include a polymer that is the same as or similar to a polymer forming the microcapsules (e.g., if the microcapsules include nylon shells, the dispersing polymeric material can be selected to include nylon). As another example, the dispersing polymeric material can be selected to include a polymer with one or more functional groups, such as amine or epoxy, to provide such affinity for the microcapsules (e.g., if the microcapsules include one or more carboxyl groups, the dispersing polymeric material can be selected to include a polymer with one or more epoxy groups, such as polystearyl methacrylate-co-glycidyl methacrylate). Desirably, the dispersing polymeric material can be selected to be sufficiently non-reactive with the temperature regulating material so that a desired temperature stabilizing range is maintained when the temperature regulating material is dispersed within the dispersing polymeric material.

For example, a dispersing polymeric material can include high-density polyethylenes having a melt index in the range of about 4 to about 36 g/10 min (e.g., high-density polyethylenes having melt indices of 4, 12, and 36 g/10 min, available from Sigma-Aldrich Corp., St. Louis, Missouri), modified forms of high-density polyethylenes (e.g., Fusabond® E MB 100D, available from DuPont Inc., Wilmington, Delaware), and modified forms of ethylene propylene rubber (e.g., Fusabond® N MF416D, available from DuPont Inc., Wilmington, Delaware). As one of ordinary skill in the art will understand, a melt index typically refers to a measure of the flow characteristics of a polymer (or a mixture of polymers) and typically inversely correlates with a molecular weight of the polymer (or the mixture of polymers). For polar phase change materials (e.g., polyethylene glycols, polytetramethylene glycols, and their homologues), the dispersing polymeric material can include a polar polymer (or a mixture of polar polymers) to facilitate dispersion of the polar phase change materials. Thus, for example, the dispersing polymeric material can include copolymers of polyesters, such as polybutylene terephthalate-block-polytetramethylene glycols (e.g., Hytrel® 3078, 5544, and 8238, available from DuPont Inc., Wilmington, Delaware), and copolymers of polyamides, such as polyamide-block-polyethers (e.g., Pebax® 2533, 4033, 5533, 7033, MX 1205, and MH 1657, available from ATOFINA Chemicals, Inc., Philadelphia, Pennsylvania).

According to some embodiments of the invention, a dispersing polymeric material can have a slight or partial compatibility or miscibility with or affinity for a temperature regulating material (e.g., a semi-miscible polymer). Such partial affinity can be adequate to facilitate dispersion of the temperature regulating material and to facilitate processing at higher temperatures. At lower temperatures and shear conditions and once a polymeric composite has been formed, this partial affinity can allow the temperature regulating material to separate out. For embodiments of the invention where a phase change material in a raw form is used, this partial affinity can lead to insolubilization of the phase change material and increased phase change material domain formation within the polymeric composite. According to some embodiments of the invention, domain formation can lead to an improved thermal regulating property by facilitating transition of the phase change material between two states. In addition, domain formation can serve to reduce or prevent loss or leakage of the phase change material from the polymeric composite during processing or during use.

For example, certain phase change materials such as paraffinic hydrocarbons can be compatible with polyolefins or copolymers of polyolefins at lower concentrations of the phase change materials or when the temperature is above a critical solution temperature. Thus, for example, mixing of a paraffinic hydrocarbon (or a mixture of paraffinic hydrocarbons) and polyethylene or polyethylene-co-vinyl acetate can be achieved at higher temperatures and higher concentrations of the paraffinic hydrocarbon to produce a homogenous blend that can be easily controlled, pumped, and processed to form a polymeric composite. Once the polymeric composite has been formed and has cooled, the paraffinic hydrocarbon can become insoluble and can separate out into distinct domains. These domains can allow for pure melting or crystallization of the paraffinic hydrocarbon for an improved thermal regulating property. In addition, these domains can serve to reduce or prevent loss or leakage of the paraffinic hydrocarbon. According to some embodiments of the invention, the polyethylene-co-vinyl acetate can have between about 5 and about 90 percent by weight of the vinyl acetate, and, according to other embodiments of the invention, the vinyl acetate content is between about 5 and about 50 percent by weight. In one embodiment, the vinyl acetate content is desirably between about 18 to about 25 percent by weight. This content of vinyl acetate can allow for temperature miscibility control when mixing the paraffinic hydrocarbon and the polyethylene-co-vinyl acetate to form a blend. In particular, this vinyl acetate content can allow for excellent miscibility at higher temperatures, thus facilitating melt spinning process stability and control due to homogeneity of the blend. At lower temperatures (e.g., room temperature or normal commercial fabric use temperatures), the polyethylene-co-vinyl acetate is semi-miscible with the paraffinic hydrocarbon, thus allowing for separation and domain formation of the paraffinic hydrocarbon.

It should be recognized that a dispersing polymeric material can be selected to be compatible or miscible with or have an affinity for a matrix polymeric material. Here, the dispersing polymeric material can serve as a compatibilizing link between a temperature regulating material and the matrix polymeric material to thereby facilitate incorporating the temperature regulating material in a polymeric composite.

Typically, a dispersing polymeric material will include a thermoplastic polymer (or a mixture of thermoplastic polymers) (i.e., one that can be heated to form a melt and subsequently shaped or molded to form a polymeric composite). According to some embodiments of the invention, the dispersing polymeric material desirably includes one or more low molecular weight polymers. A low molecular weight polymer typically has a low viscosity when heated to form a melt, which low viscosity can facilitate dispersion of a temperature regulating material in the melt. As discussed previously, some polymers can be provided in a variety of forms having different molecular weights. Accordingly, as used herein, the term "low molecular weight polymer" can refer to a low molecular weight form of a polymer (e.g., a low molecular weight form of a polymer discussed herein). For example, a polyethylene having a number average molecular weight of about 20,000 (or less) can be used as a low molecular weight polymer in an embodiment of the invention. It should be recognized that a molecular weight or a range of molecular weights associated with a low molecular weight polymer can depend on the particular polymer selected (e.g., polyethylene) or on the method or equipment used to mix a temperature regulating material with the low molecular weight polymer.

A dispersing polymeric material can include a polymer (or a mixture of polymers) having a variety of chain structures that include one or more types of monomer units. In particular, the dispersing polymeric material can include a linear polymer, a branched polymer (e.g., star branched polymer, comb branched polymer, or dendritic branched polymer), or a mixture thereof. The dispersing polymeric material can include a homopolymer, a copolymer (e.g., terpolymer, statistical copolymer, random copolymer, alternating copolymer, periodic copolymer, block copolymer, radial copolymer, or graft copolymer), or a mixture thereof. As discussed previously, the reactivity and functionality of a polymer can be altered by addition of a functional group, such as amine, amide, carboxyl, hydroxyl, ester, ether, epoxy, anhydride, isocyanate, silane, ketone, and aldehyde. The dispersing polymeric material can include a polymer capable of crosslinking, entanglement, or hydrogen bonding in order to increase its toughness or its resistance to heat, moisture, or chemicals.

Examples of dispersing polymeric materials include polyamides (e.g., Nylon 6, Nylon 6/6, Nylon 12, polyaspartic acid, polyglutamic acid, and so forth), polyamines, polyimides, polyacrylics (e.g., polyacrylamide, polyacrylonitrile, esters of methacrylic acid and acrylic acid, and so forth), polycarbonates (e.g., polybisphenol A carbonate, polypropylene carbonate, and so forth), polydienes (e.g., polybutadiene, polyisoprene, polynorbornene, and so forth), polyepoxides, polyesters (e.g., polyethylene terephthalate, polybutylene terephthalate, polytrimethylene terephthalate, polycaprolactone, polyglycolide, polylactide, polyhydroxybutyrate, polyhydroxyvalerate, polyethylene adipate, polybutylene adipate, polypropylene succinate, and so forth), polyethers (e.g., polyethylene glycol (polyethylene oxide), polybutylene glycol, polypropylene oxide, polyoxymethylene (paraformaldehyde), polytetramethylene ether (polytetrahydrofuran), polyepichlorohydrin, and so forth), polyflourocarbons, formaldehyde polymers (e.g., urea-formaldehyde, melamine-formaldehyde, phenol formaldehyde, and so forth), natural polymers (e.g., cellulosics, chitosans, lignins, waxes, and so forth), polyolefins (e.g., polyethylene, polypropylene, polybutylene, polybutene, polyoctene, and so forth), polyphenylenes (e.g., polyphenylene oxide, polyphenylene sulfide, polyphenylene ether sulfone, and so forth), silicon containing polymers (e.g., polydimethyl siloxane, polycarbomethyl silane, and so forth), polyurethanes, polyvinyls (e.g., polyvinyl butyral, polyvinyl alcohol, polyvinyl acetate, polystyrene, polymethylstyrene, polyvinyl chloride, polyvinyl pryrrolidone, polymethyl vinyl ether, polyethyl vinyl ether, polyvinyl methyl ketone, and so forth), polyacetals, polyarylates, copolymers (e.g., polyethylene-co-vinyl acetate, polyethylene-co-acrylic acid, polybutylene terphthalate-co-polytetramethylene terephthalate, polylauryllactam-block-polytetrahydrofuran, and so forth), and mixtures thereof.

According to some embodiments of the invention, a polymeric composite can include up to about 100 percent by weight of a dispersing polymeric material. In some embodiments, a polymeric composite can include from about 10 percent to about 30 percent by weight of a dispersing polymeric material. And, according to one embodiment, a polymeric composite can include about 15 percent by weight of a dispersing polymeric material.

In general, a matrix polymeric material can include any polymer (or mixture of polymers) that has or provides one or more desired physical properties for a polymeric composite or an article (e.g., a synthetic fiber) made therefrom. Examples of physical properties include mechanical properties (e.g., ductility, tensile strength, and hardness), thermal properties (e.g., thermoformability), and chemical properties (e.g., reactivity). According to some embodiments of the invention, the matrix polymeric material can be compatible or miscible with or have an affinity for a dispersing polymeric material. In some embodiments of the invention, such affinity can depend on, for example, similarity of solubility parameters, polarities, hydrophobic characteristics, or hydrophilic characteristics of the dispersing polymeric material and the matrix polymeric material. Advantageously, such affinity can facilitate forming a blend of the matrix polymeric material, the dispersing polymeric material, and a temperature regulating material during manufacture of the polymeric composite and, thus, ultimately can facilitate incorporation of more uniform or greater amounts or loading level of a phase change material in the polymeric composite. As discussed previously, the dispersing polymeric material can serve as a compatibilizing link between the matrix polymeric material and the temperature regulating material to thereby facilitate incorporating the temperature regulating material in the polymeric composite.

It should be recognized that a matrix polymeric material can be selected to be compatible or miscible with or have an affinity for a temperature regulating material. In embodiments where the temperature regulating material includes a containment structure that contains a phase change material, the matrix polymeric material can be selected for its affinity for the containment structure in conjunction with, or as an alternative to, its affinity for the phase change material. According to some embodiments of the invention, the matrix polymeric material can have a slight or partial compatibility or miscibility with or affinity for the temperature regulating material. Such partial affinity can be adequate to facilitate dispersion of the temperature regulating material and to facilitate processing at higher temperatures. At lower temperatures and shear conditions and once a polymeric composite has been formed, this partial affinity can allow the temperature regulating material to separate out. For embodiments of the invention wherein a phase change material in a raw form is used, this partial affinity can lead to insolubilization of the phase change material and increased phase change material domain formation within the polymeric composite.

Typically, a matrix polymeric material will include a thermoplastic polymer (or a mixture of thermoplastic polymers). According to some embodiments of the invention, the matrix polymeric material desirably includes one or more high molecular weight polymers. A high molecular weight polymer typically has enhanced physical properties (e.g., mechanical properties) but may have a high viscosity when heated to form a melt. As discussed previously, some polymers can be provided in a variety of forms having different molecular weights. Accordingly, as used herein, the term "high molecular weight polymer" can refer to a high molecular weight form of a polymer (e.g., a high molecular weight form of a polymer discussed herein). For example, a polyester having a number average molecular weight of about 20,000 (or more) can be used as a high molecular weight polymer in an embodiment of the invention. It should be recognized that a molecular weight or a range of molecular weights associated with a high molecular weight polymer can depend on the particular polymer selected (e.g., polyester) or on the method or equipment used to mix a temperature regulating material with the high molecular weight polymer.

As with a dispersing polymeric material, a matrix polymeric material can include a polymer (or a mixture of polymers) having a variety of chain structures that include one or more types of monomer units. In particular, the matrix polymeric material can include a linear polymer, a branched polymer (e.g., star branched polymer, comb branched polymer, or dendritic branched polymer), or a mixture thereof. The matrix polymeric material can include a homopolymer, a copolymer (e.g., terpolymer, statistical copolymer, random copolymer, alternating copolymer, periodic copolymer, block copolymer, radial copolymer, or graft copolymer), or a mixture thereof. As discussed previously, the reactivity and functionality of a polymer can be altered by addition of a functional group, such as an amine, amide, carboxyl, hydroxyl, ester, ether, epoxy, anhydride, isocyanate, silane, ketone, and aldehyde, and the matrix polymeric material can include a polymer capable of crosslinking, entanglement, or hydrogen bonding in order to increase its toughness or its resistance to heat, moisture, or chemicals.

Examples of matrix polymeric materials include polyamides (e.g., Nylon 6, Nylon 6/6, Nylon 12, polyaspartic acid, polyglutamic acid, and so forth), polyamines, polyimides, polyacrylics (e.g., polyacrylamide, polyacrylonitrile, esters of methacrylic acid and acrylic acid, and so forth), polycarbonates (e.g., polybisphenol A carbonate, polypropylene carbonate, and so forth), polydienes (e.g., polybutadiene, polyisoprene, polynorbornene, and so forth), polyepoxides, polyesters (e.g., polyethylene terephthalate, polybutylene terephthalate, polytrimethylene terephthalate, polycaprolactone, polyglycolide, polylactide, polyhydroxybutyrate, polyhydroxyvalerate, polyethylene adipate, polybutylene adipate, polypropylene succinate, and so forth), polyethers (e.g., polyethylene glycol (polyethylene oxide), polybutylene glycol, polypropylene oxide, polyoxymethylene (paraformaldehyde), polytetramethylene ether (polytetrahydrofuran), polyepichlorohydrin, and so forth), polyflourocarbons, formaldehyde polymers (e.g., urea-formaldehyde, melamine-formaldehyde, phenol formaldehyde, and so forth), natural polymers (e.g., cellulosics, chitosans, lignins, waxes, and so forth), polyolefins (e.g., polyethylene, polypropylene, polybutylene, polybutene, polyoctene, and so forth), polyphenylenes (e.g., polyphenylene oxide, polyphenylene sulfide, polyphenylene ether sulfone, and so forth), silicon containing polymers (e.g., polydimethyl siloxane, polycarbomethyl silane, and so forth), polyurethanes, polyvinyls (e.g., polyvinyl butryal, polyvinyl alcohol, polyvinyl acetate, polystyrene, polymethylstyrene, polyvinyl chloride, polyvinyl pryrrolidone, polymethyl vinyl ether, polyethyl vinyl ether, polyvinyl methyl ketone, and so forth), polyacetals, polyarylates, copolymers (e.g., polyethylene-co-vinyl acetate, polyethylene-co-acrylic acid, polybutylene terphthalate-co-polytetramethylene terephthalate, polylauryllactam-block-polytetrahydrofuran, and so forth), and mixtures thereof.

According to some embodiments of the invention, a polymeric composite can include up to about 100 percent by weight of a matrix polymeric material. In some embodiments, a polymeric composite can include from about 40 percent to about 80 percent by weight of a matrix polymeric material. And, according to one embodiment, a polymeric composite can include about 70 percent by weight of a matrix polymeric material.

At this point, those of ordinary skill in the art can appreciate a number of advantages associated with various embodiments of the invention. For example, a polymeric composite in accordance with some embodiments of the invention can provide improved thermal regulating properties, which allow for an improved level of comfort when the polymeric composite is incorporated in articles such as apparel or footwear. A polymeric composite in accordance with some embodiments of the invention can include a high loading level of one or more phase change materials within the polymeric composite. According to some embodiments of the invention, such high loading level can be provided because a dispersing polymeric material can facilitate incorporating a temperature regulating material in the polymeric composite. Advantageously, a polymeric composite can also include a matrix polymeric material selected to improve the polymeric composite's overall physical properties (e.g., mechanical properties) and processability (e.g., by facilitating its formation as described herein). According to some embodiments of the invention, a polymeric phase change material can provide adequate mechanical properties and can be used as a dispersing polymeric material, thus allowing for an even higher loading level and further improved thermal regulating properties.

According to some embodiments of the invention, a polymeric composite can have a latent heat that is at least about 2 J/g, such as at least about 10 J/g, at least about 20 J/g, at least about 30 J/g, at least about 40 J/g, at least about 50 J/g, or at least about 60 J/g. In one embodiment, the polymeric composite can have a latent heat ranging from about 2 J/g to about 200 J/g, such as from about 20 J/g to about 200 J/g, from about 40 J/g to about 200 J/g, or from about 60 J/g to about 200 J/g.

A general approach to forming a polymeric composite according to some embodiments of the invention is discussed below. Initially, a temperature regulating material, a dispersing polymeric material, and a matrix polymeric material are provided. As discussed previously, the temperature regulating material can include a phase change material and can further include a containment structure (e.g., microcapsules) to encapsulate, contain, surround, or absorb the phase change material. According to some embodiments of the invention, the dispersing polymeric material can include a low molecular weight polymer having an affinity for the containment structure or the phase change material, and the matrix polymeric material can include a high molecular weight polymer having an affinity for the dispersing polymeric material and providing one or more desired physical properties to the polymeric composite or to an article made therefrom. As discussed previously, it is also contemplated that a polymeric phase change material can be used as the dispersing polymeric material, and the matrix polymeric material can be omitted for some embodiments of the invention.

Next, the temperature regulating material is mixed with the dispersing polymeric material to form a first blend. According to some embodiments of the invention, the dispersing polymeric material is melted to form a first melt, and the temperature regulating material is dispersed in the first melt to form the first blend.

A second blend is then formed using the first blend and the matrix polymeric material. According to some embodiments of the invention, the first blend is processed to form granules, and the granules are mixed with the matrix polymeric material to form the second blend. In particular, the matrix polymeric material can be melted to form a second melt, and the granules can be dispersed in the second melt to form the second blend. Alternatively, the second blend can be formed by melting the granules and adding the matrix polymeric material thereto. According to other embodiments of the invention, the granules need not be formed, and the first blend is mixed with the matrix polymeric material to form the second blend.

Once formed, the second blend is processed to form the polymeric composite. According to some embodiments of the invention, the second blend is processed to form pellets having enhanced reversible thermal properties provided by the phase change material incorporated therein.

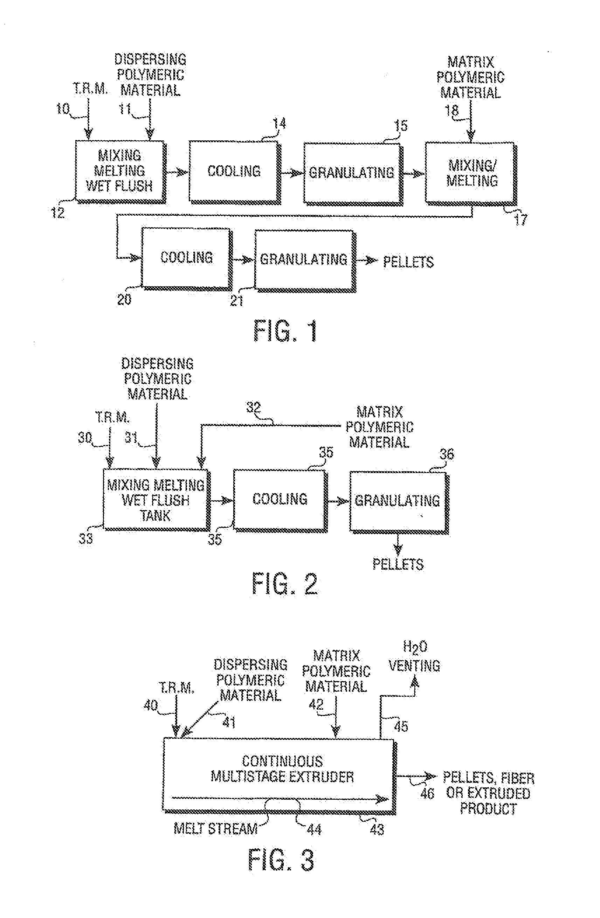

The invention is more fully appreciated with reference to FIG. 1, which illustrates a manufacturing process for forming a polymeric composite in accordance with an embodiment of the invention.

With reference to FIG. 1, a temperature regulating material is provided (step 10). In the present embodiment, the temperature regulating material includes a phase change material and microcapsules that contain the phase change material. Here, the temperature regulating material can further include an amount of water wetting, coating, or absorbed by the microcapsules to form water-wetted microcapsules. These water-wetted microcapsules can form a wet cake. The wet cake can include from about 1 percent to about 90 percent by weight of the microcapsules and the phase change material with a remaining portion including water. Typically, the wet cake includes from about 60 percent to about 70 percent by weight of the microcapsules and the phase change material with a remaining portion including water. According to some embodiments of the invention, use of this wet cake can serve to facilitate handling of the microcapsules or can improve dispersion (e.g., prevent lumping) of the microcapsules in a melt.

As an alternative to or in conjunction with the microcapsules, other containment structures can be used to encapsulate, contain, surround, or absorb the phase change material. Also, it should be recognized that the temperature regulating material can alternatively, or in conjunction, include a phase change material in a raw form. The phase change material in the raw form can be provided as a solid in a variety of forms (e.g., bulk form, powders, pellets, granules, flakes, and so forth) or as a liquid in a variety of forms (e.g., molten form, dissolved in a solvent, and so forth).

Next, a dispersing polymeric material is provided (step 11). As discussed previously, the dispersing polymeric material can include any polymer (or mixture of polymers) that facilitates incorporating the temperature regulating material in the polymeric composite. In the present embodiment, the dispersing polymeric material includes a low molecular weight polymer having an affinity for the microcapsules. It should be recognized that the dispersing polymeric material can include one or more additional polymers (e.g., one or more additional low molecular weight polymers). It is also contemplated that the dispersing polymeric material can include a polymeric phase change material.

As shown in FIG. 1, the temperature regulating material is mixed with the dispersing polymeric material to form a first blend (step 12). In accordance with the present embodiment, the dispersing polymeric material is initially melted to form a first melt (e.g., in a heated mixing bowl or in a wet flushing apparatus), and the temperature regulating material (e.g., the wet cake) is added to and dispersed in the first melt to form the first blend. Uniform dispersion of the microcapsules containing the phase change material in the first melt can be facilitated by the affinity of the dispersing polymeric material for the microcapsules. Also, dispersion can be facilitated by maintaining the dispersing polymeric material in a molten state or by mixing (e.g., agitation or stirring). In the present embodiment, the water of the wet cake can be substantially removed by wet flushing. In particular, the first blend can be heated until the water of the wet cake is substantially eliminated such that, for example, the first blend includes less than about 1 percent by weight of water. It should be recognized that step 12 can alternatively include dry blending the temperature regulating material with the dispersing polymeric material to form a dry blend, which can be subsequently heated to form the first blend.

Once formed, the first blend is processed to form granules (steps 14 and 15). In the present embodiment, the first blend is cooled to form a first solid (step 14), and the first solid is granulated to form the granules (step 15). According to some embodiments of the invention, the first blend is extruded, for example, into a thread (or threads), which thread is cooled and subsequently granulated to form the granules. Extrusion can be performed using any extruder (including any conventional extruder such as a single screw extruder) to form a thread having a variety of regular or irregular cross sectional shapes.

In general, any method (including any conventional method) can be used to granulate the first solid. For example, the first solid can be pulverized, cut, or chopped using any conventional method to form the granules. The granules can be formed with a variety of shapes (e.g., spherical, ellipsoidal, cylindrical, powdered form, irregularly shaped, and so forth) and sizes. The granules can have the same or different shapes or sizes and can be formed with smooth or rough surfaces. According to some embodiments of the invention, the granules can have a maximum linear dimension (e.g., length or diameter) ranging from about 0.01 to about 10 millimeters and typically from about 1 to about 5 millimeters.

The granules can include from about 30 percent to about 60 percent by weight of the temperature regulating material (e.g., by dry weight of the microcapsules and the phase change material dispersed therein) with a remaining portion including the dispersing polymeric material. According to some embodiments of the invention, the granules typically include from about 45 percent to about 55 percent by weight of the microcapsules and the phase change material with a remaining portion including the dispersing polymeric material. As discussed above, the granules can also include a small amount of water (e.g., less than about 1 percent by weight of water).

A matrix polymeric material is then provided (step 18), and, as discussed previously, the matrix polymeric material can include any polymer (or mixture of polymers) that provides one or more desired physical properties for the polymeric composite or for an article made therefrom. In the present embodiment, the matrix polymeric material includes a high molecular weight polymer having an affinity for the dispersing polymeric material and providing desired physical properties, such as desired mechanical or thermal properties. It should be recognized that the matrix polymeric material can include one or more additional polymers (e.g., one or more additional high molecular weight polymers). It is also contemplated that the matrix polymeric material can be omitted for some embodiments of the invention.

The granules formed from step 15 are mixed with the matrix polymeric material to form a second blend (step 17). In accordance with the present embodiment, the matrix polymeric material is initially melted to form a second melt, and the granules are added to and dispersed in the second melt to form the second blend. Dispersion of the granules in the second melt can be facilitated by the affinity of the matrix polymeric material for the dispersing polymeric material. Moreover, the granules typically melt after being added to the second melt to release the microcapsules containing the phase change material, and uniform dispersion of the microcapsules in the second melt can be facilitated by the affinity of the matrix polymeric material for the dispersing polymeric material and the affinity of the dispersing polymeric material for the microcapsules. Dispersion can also be facilitated by maintaining the matrix polymeric material in a molten state or by mixing (e.g., agitation or stirring). In the present embodiment, the water of the wet cake can be further removed by wet flushing. It should be recognized that step 17 can alternatively include dry blending the granules with the matrix polymeric material to form a dry blend, which can be subsequently heated to form the second blend.

Once formed, the second blend is processed to form the polymeric composite (steps 20 and 21). As discussed previously, the polymeric composite can be formed in a variety of shapes, such as pellets, fibers, flakes, sheets, films, rods, and so forth. In the present embodiment, the second blend is cooled to form a second solid (step 20), and the second solid is granulated to form pellets (step 21). According to some embodiments of the invention, the second blend is extruded, for example, into a thread (or threads), which thread is cooled and subsequently granulated to form the pellets. Extrusion can be performed using any extruder (including any conventional extruder such as a single screw extruder) to form a thread having a variety of regular or irregular cross sectional shapes.

In general, any method (including any conventional method) can be used to granulate the second solid. For example, the second solid can be pulverized, cut, or chopped using any conventional method to form the pellets. The pellets can be formed with a variety of shapes (e.g., spherical, ellipsoidal, cylindrical, powdered form, irregularly shaped, and so forth) and sizes. The pellets can have the same or different shapes or sizes and can be formed with smooth or rough surfaces. According to some embodiments of the invention, the pellets can have a maximum linear dimension (e.g., length or diameter) ranging from about 1 to about 10 millimeters and typically from about 1 to about 5 millimeters.

According to the present embodiment of the invention, the formed pellets typically include from about 10 percent to about 30 percent by weight of the temperature regulating material (e.g., the microcapsules and the phase change material), from about 10 percent to about 30 percent by weight of the dispersing polymeric material, and from about 40 percent to about 80 percent by weight of the matrix polymeric material. In addition, the pellets can include an amount of water that is typically less than about 1 percent by weight. The pellets can be used to form a variety of articles having enhanced reversible thermal properties, such as synthetic fibers, films, and injection molded articles.

FIG. 2 illustrates a manufacturing process to form a polymeric composite in accordance with another embodiment of the invention. As with the previous embodiment, a temperature regulating material, a dispersing polymeric material, and a matrix polymeric material are provided (steps 30-32). As discussed previously, it is also contemplated that a polymeric phase change material can be used as the dispersing polymeric material, and the matrix polymeric material can be omitted for some embodiments of the invention.

As shown in FIG. 2, the temperature regulating material, the dispersing polymeric material, and the matrix polymeric material are then mixed together (step 33). In accordance with the present embodiment, the dispersing polymeric material is initially melted to form a first melt, and the temperature regulating material is added to and dispersed in the first melt to form a first blend. If present, water can be substantially removed by wet flushing. It should be recognized that the temperature regulating material can alternatively be dry blended with the dispersing polymeric material to form a dry blend, which can be subsequently heated to form the first blend. Next, the first blend is mixed with the matrix polymeric material to form a second blend. The matrix polymeric material can be initially melted to form a second melt, and the first blend can be mixed with the second melt to form the second blend. Alternatively, the matrix polymeric material can be added to and dispersed in the first blend to form the second blend.

It should be recognized that the temperature regulating material, the dispersing polymeric material, and the matrix polymeric material can be mixed together using a variety of other methods to form the second blend. For example, a polymeric blend of the dispersing polymeric material and the matrix polymeric material can be formed, and the temperature regulating material can be subsequently added to and dispersed in the polymeric blend to form the second blend. As another example, the temperature regulating material, the dispersing polymeric material, and the matrix polymeric material can be dry blended to form a dry blend, which can be subsequently heated to form the second blend. As a further example, the temperature regulating material, the dispersing polymeric material, and the matrix polymeric material can be provided together, heated, and mixed to form the second blend. In particular, the temperature regulating material, the dispersing polymeric material, and the matrix polymeric material can be fed into an extruder to form the second blend, according to some embodiments of the invention.

Once formed, the second blend is processed to form the polymeric composite (steps 35 and 36). As discussed previously, the polymeric composite can be formed in a variety of shapes, such as pellets, fibers, flakes, sheets, films, rods, and so forth. In the present embodiment, the second blend is cooled to form a solid (step 35), and the solid is granulated to form pellets (step 36). According to some embodiments of the invention, the second blend is extruded, for example, into a thread (or threads), which thread is cooled and subsequently granulated to form the pellets.

Turning next to FIG. 3, a manufacturing process to form a polymeric composite in accordance with a further embodiment of the invention is illustrated. In the present embodiment, the polymeric composite is formed using a multistage extruder 43. A multistage extruder is typically understood to include two or more extruder units that can be operatively connected in a variety of configurations (e.g., in series), wherein each extruder unit can be a single or multiple screw extruder, can have one or more inlet openings to receive a substance to be extruded, and can have one or more discharge ports to vent gases such as air, water (e.g., steam), and volatile materials.

As shown in FIG. 3, a temperature regulating material and a dispersing polymeric material are provided (steps 40 and 41) and are fed into the multistage extruder 43. As discussed previously, it is also contemplated that a polymeric phase change material can be used as the dispersing polymeric material for some embodiments of the invention. In the present embodiment, the temperature regulating material and the dispersing polymeric material can be fed into the same inlet opening or different inlet openings of the multistage extruder 43. Within the multistage extruder 43, the temperature regulating material is mixed with the dispersing polymeric material to form a first blend, and the first blend is advanced through the multistage extruder 43 along a melt stream path 44.

Next, a matrix polymeric material is provided (step 42) and is fed into the multistage extruder 43. As discussed previously, it is also contemplated that the matrix polymeric material can be omitted for some embodiments of the invention. In the present embodiment, the matrix polymeric material is fed into an inlet opening downstream along the melt stream path 44. Alternatively, the matrix polymeric material can be fed into an inlet opening upstream along the melt stream path 44 (e.g., the same inlet opening used to receive the temperature regulating material or the dispersing polymeric material). Within the multistage extruder 43, the first blend is mixed with the matrix polymeric material to form a second blend. As shown in FIG. 3, water, if present, can be substantially removed through a discharge port (step 45).

Once formed, the second blend is processed to form the polymeric composite (step 46). As discussed previously, the polymeric composite can be formed in a variety of shapes, such as pellets, fibers, flakes, sheets, films, rods, and so forth. For example, the second blend can be extruded through a die into a thread (or threads), which thread is cooled and subsequently granulated to form pellets. As another example, the second blend can be extruded through a spinneret to form synthetic fibers.

As discussed previously, polymeric composites in accordance with some embodiments of the invention can be formed using one or more phase change materials in a raw form. For example, the manufacturing processes discussed above in connection with FIG. 1, FIG. 2, and FIG. 3 can employ a temperature regulating material that, alternatively or in conjunction, includes a phase change material in a raw form. The phase change material in the raw form can be provided as a solid in a variety of forms (e.g., bulk form, powders, pellets, granules, flakes, and so forth) or as a liquid in a variety of forms (e.g., molten form, dissolved in a solvent, and so forth) (e.g., at step 10 of FIG. 1, at step 30 of FIG. 2, or at step 40 of FIG. 3). For some embodiments of the invention, a phase change material in a raw form is incorporated into a polymeric composite, wherein the phase change material can be contained within one or more isolated volumes or spaces that are dispersed throughout the polymeric composite. As discussed previously, it is also contemplated that a polymeric phase change material can be used as a dispersing polymeric material, and the polymeric phase change material can be used in a raw form.

According to some embodiments of the invention, a phase change material in a raw form can be introduced at virtually any time during a manufacturing process to form a polymeric composite (e.g., at virtually any of the steps illustrated in FIG. 1, FIG. 2, and FIG. 3). For example, a phase change material can be introduced via liquid injection or by feeding the phase change material in a solid form alone or in conjunction with a dispersing polymeric material or a matrix polymeric material. A phase change material in a raw liquid form can be filtered or mixed to insure homogeneity prior to liquid injection. A phase change material in a raw solid form can be fed into a feed throat of an extruder or can be side stuffed into the extruder in order to prevent feed throat plugging. According to some embodiments of the invention, a phase change material in a raw form is desirably introduced at a later time during a manufacturing process to thereby ensure adequate dispersion of the phase change material or to reduce its exposure to manufacturing conditions (e.g., high temperature or shear forces) associated with forming a polymeric composite. By using such a late-stage addition of the phase change material, exposure of the phase change material to elevated temperatures and any subsequent degradation or loss of the phase change material can be reduced.

Various other embodiments are within the spirit and scope of the invention. For example, as discussed previously, a polymeric composite in accordance with some embodiments of the invention can include a temperature regulating material and either a dispersing polymeric material or a matrix polymeric material. Either the dispersing polymeric material or the matrix polymeric material can be selected to have an affinity for (or a slight or partial affinity for) the temperature regulating material. According to an embodiment of the invention, the polymeric composite can include the temperature regulating material and the matrix polymeric material that desirably includes one or more high molecular weight polymers. In forming the polymeric composite, the temperature regulating material and either the dispersing polymeric material or the matrix polymeric material can be mixed to form a blend, and the blend can then be processed to form the polymeric composite.

As discussed previously, polymeric composites in accordance with some embodiments of the invention can be processed to form a variety of articles having enhanced reversible thermal properties. For example, pellets formed in accordance with some embodiments of the invention can be used to form synthetic fibers, for injection molding processes, or for extrusion processes. In particular, the pellets can be used in a melt spinning process to form synthetic fibers including, for example, from about 10 percent to about 30 percent by weight of a temperature regulating material. Once formed, the synthetic fibers can be collected into a strand or cut into staple fibers. The synthetic fibers can be used to make woven or non-woven fabrics, or, alternatively, the synthetic fibers can be wound into a yarn to be used thereafter in a weaving or a knitting process to form a synthetic fabric. It should be recognized that the pellets can be mixed with one or more polymers (e.g., one or more thermoplastic polymers) to form a blend, which one or more polymers can be the same as or different from polymer(s) included in the pellets. The resulting blend can then be processed to form synthetic fibers including, for example, from about 5 percent to about 10 percent by weight of the temperature regulating material. In addition, one or more thermoplastic polymers can be used in conjunction with the pellets to form multi-component melt spun fibers (e.g., bicomponent fibers), multi-component extruded films, multi-component injection molded products, and so forth.

### EXAMPLES

The following examples describe specific aspects of some embodiments of the invention to illustrate and provide a description for those of ordinary skill in the art. The examples should not be construed as limiting the invention, as the examples merely provide specific methodology useful in understanding and practicing some embodiments of the invention.

### Example 1

About 5.0 pounds of a low molecular weight polyethylene homopolymer (AC-16 polyethylene, drop point of 102°C, manufactured by Honeywell Specialty Chemical) was added to a wet flushing apparatus, and the homopolymer was then slowly melted and mixed at about 110°C to about 130°C. Once the homopolymer was melted, about 8.47 pounds of a wet cake was slowly added to the molten homopolymer over about a 30 minute time period to form a first blend. The wet cake included water-wetted microcapsules containing a phase change material (micro PCM lot# M 42-31, 59.0 percent by weight of the microcapsules and the phase change material, manufactured by MicroTek Laboratories, Inc.).

Water was flashed off as the microcapsules containing the phase change material was added to and dispersed in the molten homopolymer. Mixing continued until less than about 0.15 percent by weight of the water remained (as measured using Karl-Fischer titration). The resulting first blend was then cooled to form a first solid, and the first solid was chopped to form a chopped material for further processing. The chopped material included about 50 percent by weight of the microcapsules and the phase change material.

A dry blend was then formed by dry blending about 30 pounds of the chopped material with about 70 pounds of a high molecular weight fiber-grade polypropylene thermoplastic polymer (Polypropylene homopolymer 6852 from PB Amoco Polymers).

The resulting dry blend was then extruded using a 2 ½ inch single screw extruder with all zones set at about 230°C, with a screw speed of about 70 rpm, with 150 mesh screens, and with a nitrogen purge, thus producing pellets. The pellets were then oven dried overnight at about 50°C and at about 1 mm Hg of vacuum.

The pellets, including about 15 percent by weight of the microcapsules and the phase change material, were then extruded/melt spun at temperatures between about 230°C and 265°C (e.g., between about 235°C to 245°C).

Synthetic fibers were spun/wound at take-up speeds of up to about 1600 meters per minute (mpm) to yield from about 20 to about 6 deniers per fiber, and the synthetic fibers exhibited enhanced reversible thermal properties provided by the phase change material as discussed in Example 2.

### Example 2

Differential Scanning Calorimeter (DSC) measurements of the above synthetic fibers were made using a Perkin Elmer Pyris 1 instrument. Cooling was accomplished using a FTS Systems Intercoller 1. Data analysis was performed using a Perkin Elmer Pyris Thermal Analysis System and Software for Windows, version 3.72.

Test samples were prepared in Perkin Elmer hermetically sealed aluminum sample pans, and testing was performed while the test samples were continuously subjected to N₂ flow.

Test conditions included: 1) cooling the test samples to about -10°C; 2) isothermal hold for about 1 minute at -10°C; 3) heating from -10°C to about 50°C at a rate of about 5°C per minute; 4) isothermal hold for about 1 minute at 50°C; and then 5) cooling from 50°C to about -10°C at a rate of about 5°C per minute.

Using the DSC measurements as described above, the synthetic fibers provided between about 17.5 and 23.2 J/g of thermal energy storage capacity (i.e., latent heat).

### Example 3

About 3.1307 grams of a phase change material in a raw form (Kenwax 19 paraffin, blend of C18 through C24 paraffinic hydrocarbons, 150 J/g latent heat) was placed in a vial, and about 3.1255 grams of a polymeric material (Elvax 450, 18 percent by weight of vinyl acetate, polyethylene-co-vinyl acetate polymer supplied by DuPont Inc.) having a slight or partial affinity for the phase change material was added to the vial. The phase change material and the polymeric material were mixed together at between 120°C to 130°C by hand to produce a 50:50 by weight blend that was homogeneous and clear. Upon cooling, a polymeric composite was formed, which polymeric composite was hazy and rubbery and without a waxy or greasy feel. A DSC measurement of the polymeric composite showed 73.3 J/g of thermal energy storage capacity, which corresponds to 48.9 percent of the Kenwax 19 available to provide a thermal regulating property.

A practitioner of ordinary skill in the art requires no additional explanation in developing the polymeric composites described herein but may nevertheless find some helpful guidance by examining the patent of Hartmann, entitled "Stable Phase Change Materials for Use in Temperature Regulating Synthetic Fibers, Fabrics And Textiles," U.S. Patent No. 6,689,466, issued on February 10, 2004, and the patent of Magill et al., entitled "Multi-component Fibers Having Enhanced Reversible Thermal Properties and Methods of Manufacturing Thereof," U.S. Patent No. 6,855,422, issued on February 15, 2005.

## Claims

1. A method of manufacturing a polymeric composite, comprising:
mixing a plurality of microcapsules containing a phase change material with a dispersing polymeric material to form a first blend, the dispersing polymeric material having a latent heat of at least 40 J/g and a transition temperature in the range of 0°C to 50°C; and
processing the first blend to form the polymeric composite.

2. The method of claim 1, wherein the phase change material has a latent heat of at least 40 J/g and a transition temperature in the range of 0°C to 50°C.

3. The method of claim 1, wherein the phase change material includes a paraffinic hydrocarbon having from 16 to 22 carbon atoms.

4. The method of claim 1, wherein the plurality of microcapsules are coated with water to form a wet cake.

5. The method of claim 4, further comprising heating the first blend until the first blend includes less than 1 percent by weight of water.

6. The method of claim 1, wherein the latent heat of the dispersing polymeric material is at least 60 J/g.

7. The method of claim 1, wherein the transition temperature of the dispersing polymeric material is in the range of 22°C to 40°C.

8. The method of claim 1, wherein the dispersing polymeric material includes a polymer selected from the group consisting of polyethylene, polyethylene glycol, polyethylene oxide, polypropylene, polypropylene glycol, polytetramethylene glycol, polypropylene malonate, polyneopentyl glycol sebacate, polypentane glutarate, polyvinyl myristate, polyvinyl stearate, polyvinyl laurate, polyhexadecyl methacrylate, polyoctadecyl methacrylate, and polyesters.

9. The method of claim 1, wherein the mixing the plurality of microcapsules with the dispersing polymeric material includes:
melting the dispersing polymeric material to form a melt; and
dispersing the plurality of microcapsules in the melt to form the first blend.

10. The method of claim 9, wherein the dispersing polymeric material has an affinity for the plurality of microcapsules to facilitate dispersing the plurality of microcapsules in the melt.

11. The method of claim 1, wherein the processing the first blend to form the polymeric composite includes:
processing the first blend to form granules;
mixing the granules with a matrix polymeric material to form a second blend; and
processing the second blend to form the polymeric composite.

12. The method of claim 11, wherein the processing the first blend to form the granules includes:
cooling the first blend to form a solid; and
granulating the solid to form the granules.

13. The method of claim 11, wherein the mixing the granules with the matrix polymeric material includes:
melting the matrix polymeric material to form a melt; and
dispersing the granules in the melt to form the second blend.

14. The method of claim 13, wherein the matrix polymeric material has an affinity for the dispersing polymeric material to facilitate dispersing the granules in the melt.

15. The method of claim 11, wherein the mixing the granules with the matrix polymeric material includes:
dry blending the granules with the matrix polymeric material to form a dry blend; heating the dry blend to form the second blend.

16. The method of claim 11, wherein the polymeric composite is formed as pellets, and the processing the second blend includes:
cooling the second blend to form a solid; and
granulating the solid to form the pellets.

17. A method of manufacturing a polymeric composite, comprising:
melting a first temperature regulating material to form a first melt;
dispersing a second temperature regulating material in the first melt to form a first blend;
processing the first blend to form granules;
melting a matrix polymeric material to form a second melt;
dispersing the granules in the second melt to form a second blend; and
processing the second blend to form the polymeric composite,
wherein the first temperature regulating material includes a polymeric phase change material having a latent heat of at least 50 J/g and a transition temperature in the range of 10°C to 50°C,
and wherein the second temperature regulating material includes a plurality of microcapsules containing a phase change material having a latent heat of at least 50 J/g and a transition temperature in the range of 10°C to 50°C.

18. The method of claim 17, wherein the first temperature regulating material includes a polymer having an affinity for the plurality of microcapsules.

19. A polymeric composite, comprising:
a polymeric material having a latent heat of at least 40 J/g and a transition temperature in the range of 0°C to 50°C; and
a plurality of microcapsules dispersed in the polymeric material, the plurality of microcapsules containing a phase change material having a latent heat of at least 40 J/g and a transition temperature in the range of 0°C to 50°C.

20. The polymeric composite of claim 19, wherein the latent heat of the polymeric material is at least 60 J/g.

21. The polymeric composite of claim 19, wherein the transition temperature of the polymeric material is in the range of 22°C to 40°C.

22. The polymeric composite of claim 19, wherein the polymeric material includes a polymer selected from the group consisting of polyethylene glycol, polyethylene oxide, polytetramethylene glycol, and polyesters.

23. The polymeric composite of claim 19, wherein the phase change material includes a paraffinic hydrocarbon having from 16 to 22 carbon atoms.

24. The polymeric composite of claim 19, wherein the polymeric composite includes from 10 percent to 30 percent by weight of the microcapsules containing the phase change material.

25. The polymeric composite of claim 19, wherein the polymeric composite includes from 15 percent to 25 percent by weight of the microcapsules containing the phase change material.

26. A polymeric composite, comprising:
a blend of a polymeric material and a non-encapsulated phase change material, the polymeric material having a partial affinity for the non-encapsulated phase change material, such that the non-encapsulated phase change material forms a plurality of domains dispersed in the polymeric material, the non-encapsulated phase change material having a latent heat of at least 60 J/g and a transition temperature in the range of 10°C to 50°C, wherein the polymeric material has a latent heat higher than 40 J/g and a transition temperature between 0°C and 50°C.

## Patentansprüche

1. Verfahren zum Herstellen eines polymerischen Komposits, umfassend:
Mischen einer Vielzahl von Mikrokapseln, die ein Phasenwechselmaterial enthalten, mit einem dispergierenden polymerischen Material, um eine erste Mischung zu bilden, wobei das dispergierende polymerische Material eine latente Wärme von wenigstens 40 J/g und eine Umwandlungstemperatur in dem Bereich von 0 °C bis 50 °C hat; und
Verarbeiten der ersten Mischung, um das polymerische Komposit zu bilden.

2. Verfahren nach Anspruch 1, wobei das Phasenwechselmaterial eine latente Wärme von wenigstens 40 J/g und eine Umwandlungstemperatur in dem Bereich von 0 °C bis 50 °C hat.

3. Verfahren nach Anspruch 1, wobei das Phasenwechselmaterial einen paraffinischen Kohlenwasserstoff umfasst, der 16 bis 22 Kohlenstoffatome hat.

4. Verfahren nach Anspruch 1, wobei die Vielzahl von Mikrokapseln mit Wasser ummantelt sind, um einen Nasskuchen zu bilden.

5. Verfahren nach Anspruch 4, ferner umfassend Erhitzen der ersten Mischung bis die erste Mischung weniger als 1 Gewichtsprozent an Wasser umfasst.

6. Verfahren nach Anspruch 1, wobei die latente Wärme des dispergierenden polymerischen Materials bei wenigstens 60 J/g liegt.

7. Verfahren nach Anspruch 1, wobei die Umwandlungstemperatur des dispergierenden polymerischen Materials in dem Bereich von 22 °C bis 40 °C liegt.

8. Verfahren nach Anspruch 1, wobei das dispergierende polymerische Material ein Polymer umfasst, das aus der Gruppe ausgewählt wird, die Polyethylen, Polyethylen-Glykol, Polyethylen-Oxid, Polypropylen, Polypropylen-Glykol, Polytetramethylen-Glykol, Polypropylen-Malonat, Polyneopentyl-Glykol-Sebakat, Polypentan-Glutarat, Polyvenyl-Myristat, Polyvenyl-Stearat, Polyvenlyl-Laurat, Polyhexadecyl-Methakrylat, Polyoktodecyl-Methakrylat, und Polyester umfasst.

9. Verfahren nach Anspruch 1, wobei das Mischen der Vielzahl von Mikrokapseln mit dem dispergierenden polymerischen Material umfasst:
Schmelzen des dispergierenden polymersichen Materials, um eine Schmelze zu bilden; und
Dispergieren der Vielzahl von Mikrokapseln in der Schmelze, um die erste Mischung zu bilden.

10. Verfahren nach Anspruch 9, wobei das dispergierende polymerische Material eine Affinität für die Vielzahl von Mikrokapseln hat, um das Dispergieren der Vielzahl der Mikrokapseln in der Schmelze zu erleichtern.

11. Verfahren nach Anspruch 1, wobei das Verarbeiten der ersten Mischung zum Formen des polymerischen Komposits umfasst:
Verarbeiten der ersten Mischung, um Granulate zu bilden; Mischen der Granulate mit einem polymerischen Matrix-Material, um eine zweite Mischung zu bilden; und
Verarbeiten der zweiten Mischung, um das polymerische Komposit zu bilden.

12. Verfahren nach Anspruch 11, wobei das Verarbeiten der ersten Mischung zum Formen der Granulate umfasst:
Abkühlen der ersten Mischung, um einen Feststoff zu bilden; und
Granulieren des Feststoffs, um die Granulate zu bilden.

13. Verfahren nach Anspruch 11, wobei das Mischen der Granulate mit dem Matrix-polymerischen Material umfasst:
Schmelzen des polymerischen Matrix-Materials zum Formen einer Schmelze; und
Dispergieren der Granulate in der Schmelze, um die zweite Mischung zu bilden:

14. Verfahren nach Anspruch 13, wobei das polymerischen Matrix-Material eine Affinität für das dispergierende polymerische Material hat, um das Dispergieren der Granulate in der Schmelze zu erleichtern.

15. Verfahren nach Anspruch 11, wobei das Mischen der Granulate mit dem polymerischen Matrix-Material umfasst:
Trockenmischen der Granulate mit dem polymerischen Matrix-Material, um eine Trockenmischung zu bilden;
Erhitzen der Trockenmischung, um die zweite Mischung zu bilden.

16. Verfahren nach Anspruch 11, wobei das polymerische Komposit als Pellets gebildet ist und das Verarbeiten der zweiten Mischung umfasst:
Abkühlen der zweiten Mischung, um einen Feststoff zu bilden; und
Granulieren des Feststoffs, um die Pellets zu bilden.

17. Verfahren zum Herstellen eines polymerischen Komposits, umfassend:
Schmelzen des ersten temperaturregulierenden Materials, um eine erste Schmelze zu bilden;
Dispergieren eines zweiten temperaturregulierenden Materials in der ersten Schmelze, um eine erste Mischung zu bilden;
Verarbeiten der ersten Mischung, um Granulate zu bilden;
Schmelzen eines polymerischen Matrix-Material, um eine zweite Schmelze zu bilden;
Dispergieren der Granulate in der zweiten Schmelze, um eine zweite Mischung zu bilden; und
Verarbeiten der zweiten Mischung, um das polymerische Komposit zu bilden,
wobei das erste temperaturregulierende Material ein polymerisches Phasenwechselmaterial umfasst, das eine latente Wärme von wenigsten 50 J/g und eine Umwandlungstemperatur in dem Bereich von 10 °C bis 50 °C hat, und wobei das zweite temperaturregulierende Material eine Vielzahl von Mikrokapseln umfasst, die ein Phasenwechselmaterial enthalten, das eine latente Wärme von wenigstens 50 J/g und eine Umwandlungstemperatur in dem Bereich von 10 °C bis 50 °C hat.

18. Verfahren nach Anspruch 17, wobei das erste temperaturregulierende Material ein Polymer umfasst, das eine Affinität für die Vielzahl von Mikrokapseln hat.

19. Polymerisches Komposit, umfassend:
ein polymerisches Material, das eine latente Wärme von wenigstens 40 J/g und
eine Umwandlungstemperatur in dem Bereich von 0 °C bis 50 °C hat; und
eine Vielzahl von Mikrokapseln, die in dem polymerischen Material dispergiert sind, wobei die Vielzahl von Mikrokapseln ein Phasenwechselmaterial enthält,
das eine latente Wärme von wenigstens 40 J/g und eine Umwandlungstemperatur in dem Bereich von 0 °C bis 50 °C hat.

20. Polymerisches Komposit nach Anspruch 19, wobei die latente Wärme des polymerischen Materials bei wenigstens 60 J/g liegt.

21. Polymerisches Komposit nach Anspruch 19, wobei die Umwandlungstemperatur des polymerischen Materials in dem Bereich von 22 °C bis 40 °C liegt.

22. Polymerisches Komposit nach Anspruch 19, wobei das polymerische Material ein Polymer umfasst, das aus der Gruppe ausgewählt ist, die PolyethylenGlykol, Polyethylen-Oxid, Polytetramethylen-Glykol und Polyester umfasst.

23. Polymerisches Komposit nach Anspruch 19, wobei das Phasenwechselmaterial einen paraffinischen Kohlenstoff umfasst, der 16 bis 22 Kohlenstoffatome hat.

24. Polymerisches Komposit nach Anspruch 19, wobei das polymerische Komposit 10 bis 30 Gewichtsprozent an Mikrokapseln umfasst, die das Phasenwechselmaterial enthalten.

25. Polymerisches Komposit nach Anspruch 19, wobei das polymerische Komposit 15 bis 25 Gewichtsprozent an Mikrokapseln umfasst, die das Phasenwechselmaterial enthalten.

26. Polymerisches Komposit, umfassend:
eine Mischung von polymerischem Material und nicht-eingekapseltem Phasenwechselmaterial, wobei das polymerische Material eine Teilaffinität für das nicht-eingekapselte Phasenwechselmaterial hat, so dass das nichteingekapselte Phasenwechselmaterial eine Vielzahl von Domänen bildet, die in dem polymerischen Material dispergiert sind, wobei das nicht-eingekapselte Phasenwechselmaterial eine latente Wärme von wenigstens 60 J/g und eine Umwandlungstemperatur in dem Bereich von 10 °C bis 50 °C hat, wobei das polymerische Material eine latente Wärme von wenigstens 40 J/g und eine Umwandlungstemperatur zwischen 0 °C und 50 °C hat.

## Revendications

1. Procédé de fabrication d'un polymère composite, comportant :
le mélange d'une pluralité de microcapsules contenant un matériau à changement de phase avec un matériau polymère dispersant pour former une première composition, le matériau polymère dispersant ayant une chaleur latente d'au moins 40 J/g et une température de transition de l'ordre de 0°C à 50 °C ; et
le traitement de la première composition pour former le polymère composite.

2. Procédé selon la revendication 1, dans lequel le matériau à changement de phase a une température latente d'au moins 40 J/g et une température de transition de l'ordre de 0°C à 50°C.

3. Procédé selon la revendication 1, dans lequel le matériau à changement de phase comprend un hydrocarbone paraffinique ayant de 16 à 22 atomes de carbone.

4. Procédé selon la revendication 1, dans lequel la pluralité de microcapsules est enrobée d'eau pour former un gâteau mouillé.

5. Procédé selon la revendication 4, comprenant en outre le chauffage de la première composition jusqu'à ce que la première composition comporte moins de 1 pourcent en poids d'eau.

6. Procédé selon la revendication 1, dans lequel la chaleur latente du matériau polymère dispersant est au moins de 60 J/g.

7. Procédé selon la revendication 1, dans lequel la température de transition du matériau polymère dispersant est de l'ordre de 22°C à 40°C.

8. Procédé selon la revendication 1, dans lequel le matériau polymère dispersant comprend un polymère sélectionné parmi le groupe consistant en polyéthylène, glycol de polyéthylène, oxyde de polyéthylène, polypropylène, glycol de polypropylène, glycol de polytétraméthylène, malonate de polypropylène, sébacate de glycol de polynéopentyle, glutarate de polypentane, myristate de polyvinyle, stéarate de polyvinyle, laurate de polyvinyle, polyhéxadecyle, méthacrylate de polyohexadecyle, méthacrylate de polyoctadecyle, et polyesters.

9. Procédé selon la revendication 1, dans lequel le mélange de la pluralité de microcapsules avec le matériau polymère dispersant inclut :
le chauffage du matériau polymère dispersant pour créer une fusion; et
la dispersion de la pluralité de microcapsules dans la fusion pour former la première composition.

10. Procédé selon la revendication 9, dans lequel le matériau polymère dispersant a une affinité avec la pluralité de microcapsules pour faciliter la dispersion de la pluralité de microcapsules dans la fusion.

11. Procédé selon la revendication 1, dans lequel le traitement de la première composition pour former le polymère composite comprend :
le traitement de la première composition pour former des granulés ;
le mélange des granulés avec un matériau polymère matrice pour former une seconde composition ; et
le traitement de la seconde composition pour former le polymère composite.

12. Procédé selon la revendication 11, dans lequel le traitement de la première composition pour former les granulés comprend :
le refroidissement de la première composition pour former un solide ; et
la granulation du solide pour former des granulés.

13. Procédé selon la revendication 11, dans lequel le mélange des granulés avec le matériau polymère matrice inclut :
la fusion du matériau polymère matrice pour former une fusion ; et
la dispersion des granulés dans la fusion pour former la seconde composition.

14. Procédé selon la revendication 13, dans lequel le matériau de matrice polymère a une affinité avec le matériau polymère dispersant pour faciliter la dispersion des granulés dans la fusion.

15. Procédé selon la revendication 11, dans lequel le mélange des granulés avec le matériau polymère matrice inclut :
l'incorporation à sec des granulés avec le matériau polymère matrice pour former une composition sèche ;
le chauffage de la composition sèche pour former la seconde composition.

16. Procédé selon la revendication 11, dans lequel le polymère composite a une forme de pellets, et le traitement de la seconde composition comprend :
le refroidissement de la seconde composition pour former un solide ; et
la granulation du solide pour former les pellets.

17. Procédé de fabrication d'un polymère composite, comportant :
la fusion d'un premier matériau de régulation de la température pour former une première masse en fusion;
la dispersion d'un second matériau de régulation de la température dans la première masse en fusion pour former une première composition ;
le traitement de la première composition pour former des granulés ;
la fusion d'un matériau polymère matrice pour former une seconde masse en fusion ;
la dispersion des granulés dans la seconde masse en fusion pour former une seconde composition ; et
le traitement de la seconde composition pour former le polymère composite,
dans lequel le premier matériau de régulation de la température comporte un matériau polymère à changement de phase ayant une chaleur latente d'au moins 50 J/g et une température de transition de l'ordre de 10°C à 50°C et dans lequel le second matériau de régulation de la température contient une pluralité de microcapsules contenant un matériau polymère à changement de phase ayant une chaleur latente d'au moins 50 J/g et une température de transition de l'ordre de 10°C à 50°C.

18. Procédé selon la revendication 17, dans lequel le premier matériau de régulation de la température comporte un polymère ayant une affinité pour la pluralité de microcapsules.

19. Polymère composite, comportant :
un matériau polymère ayant une chaleur latente d'au moins 40 J/g et une température de transition de l'ordre de 0°C à 50°C ; et
une pluralité de microcapsules dispersées dans le matériau polymère, la pluralité de microcapsules contenant un matériau à changement de phase ayant une chaleur latente d'au moins 40 J/g et une température de transition de l'ordre de 0 °C à 50°C.

20. Polymère composite selon la revendication 19, dans lequel la chaleur latente du matériau polymère est d'au moins 60 J/g.

21. Polymère composite selon la revendication 19, dans lequel la température de transition est de l'ordre de 22°C à 40°C.

22. Polymère composite selon la revendication 19, dans lequel le matériau polymère comporte un polymère choisi parmi le groupe consistant en glycol de polyéthylène, oxyde de polyéthylène, glycol de polytétraméthylène et polyesters.

23. Polymère composite selon la revendication 19, dans lequel le matériau à changement de phase comprend un hydrocarbone paraffinique ayant de 16 à 22 atomes de carbone.

24. Polymère composite selon la revendication 19, dans lequel le polymère composite comprend entre 10% et 30% en poids de microcapsules contenant le matériau à changement de phase.

25. Polymère composite selon la revendication 19, dans lequel le polymère composite comprend entre 15% et 25% en poids de microcapsules contenant le matériau à changement de phase.

26. Polymère composite, comportant :
une composition d'un matériau polymère et d'un matériau non-encapsulé à changement de phase, le matériau polymère ayant une affinité partielle pour le matériau non-encapsulé à changement de phase, tel que le matériau non-encapsulé à changement de phase forme une pluralité de domaines dispersés dans le matériau polymère, le matériau non-encapsulé à changement de phase ayant une chaleur latente d'au moins 60 J/g et une température de transition de l'ordre de 10°C à 50°C, dans lequel le matériau polymère a une chaleur latente supérieure à 40 J/g et une température de transition comprise entre 0°C et 50 °C.
